# EUROPÄISCHE PATENTSCHRIFT

(11) **EP 2 712 395 B1**
(45) Veröffentlichungstag und Bekanntmachung des Hinweises auf die Patenterteilung: **24.06.2015**
(21) Anmeldenummer: 12738431.1
(22) Anmeldetag: 13.07.2012
(51) Int. Cl.: F01D 5/18, F02C 7/143

(54) **VERDICHTERSCHAUFEL MIT DÜSE**
COMPRESSOR BLADE WITH NOZZLE
AUBE DE COMPRESSEUR COMPRENANT UNE BUSE

(30) Priorität: 14.07.2011 DE 102011079195
(43) Veröffentlichungstag der Anmeldung: 02.04.2014
(73) Patentinhaber: Siemens Aktiengesellschaft, 80333 München (DE)
(72) Erfinder: WERNER, Klaus, 47574 Goch (DE)
(86) Internationale Anmeldenummer: PCT/EP2012/063816
(87) Internationale Veröffentlichungsnummer: WO 2013/007824

(56) Entgegenhaltungen:
- EP-A1- 1 422 403
- EP-A2- 2 067 964
- US-A- 4 478 553
- US-A1- 2008 247 885

## Beschreibung

Die Erfindung betrifft eine Kompressorschaufel, die Düsen aufweist, um eine Flüssigkeit in den Kompressor einzuspritzen.

Gasturbinen können mit sogenannter Nassverdichtung, im Englischen auch als "Wet Compression" bekannt, betrieben werden, bei dem eine Flüssigkeit innerhalb des Kompressors der Gasturbine in die dort strömende, zu verdichtende Luft eingespritzt wird.

Hierzu offenbart beispielsweise die EP 2 067 964 A2 die Verwendung von Einspritz-Lanzen in einem Verdichter einer Gasturbine, an denen mehrere, in unterschiedliche Richtungen spritzende Wasserdüsen angeschraubt sind. Diese Lanzen sind jedoch vergleichsweise raumgreifend und können die Aerodynamik des Verdichters stören.

Weiterhin besteht die Gefahr der Tropfenbildung, die wiederum zur Tropfenschlagerosion und folglich zur Schädigung nachfolgende Schaufeln führen kann.

Es ist daher Aufgabe der Erfindung oben genanntes Problem zu lösen.

Die Aufgabe wird gelöst durch eine Kompressorschaufel gemäß Anspruch 1.

In den Unteransprüche sind weitere vorteilhafte Maßnahmen aufgelistet, die beliebig miteinander kombiniert werden können, um weitere Vorteile zu erzielen.

Es zeigen:
- Figur 1 - 12: Ausführungsbeispiele der Erfindung,
- Figur 13: eine Gasturbine.

Die Beschreibung und die Figuren stellen nur Ausführungsbeispiele der Erfindung dar.

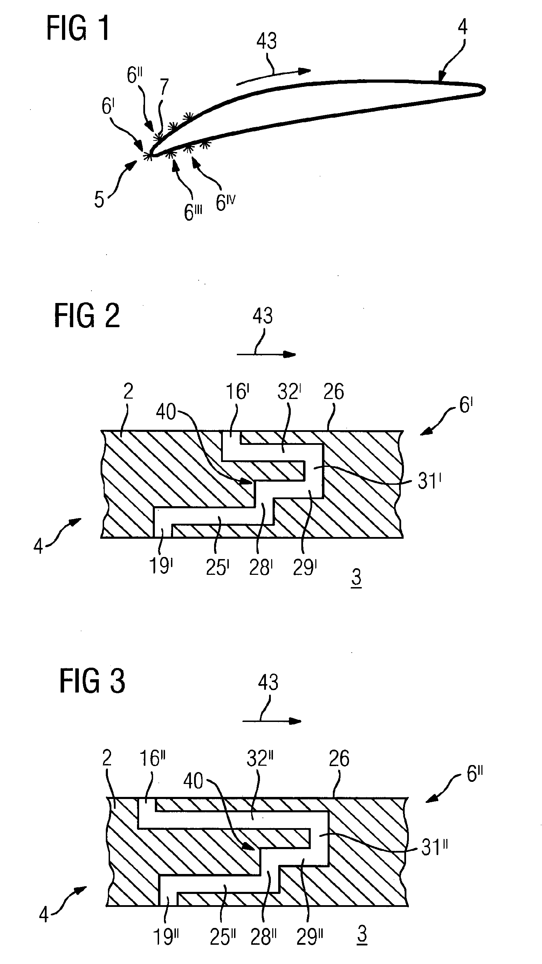

Figur 1 zeigt ein Querschnitt eines Schaufelblatts einer Schaufel, insbesondere einer Verdichterschaufel 4, die insbesondere an ihrer Vorderkante bzw. Anströmbereich 5 und stromab davon auf Saug- und/oder Druckseite mehrere Düsen 6, 6', 6", ... aufweist, aus denen ein Flüssigkeit 7, insbesondere Wasser austritt.

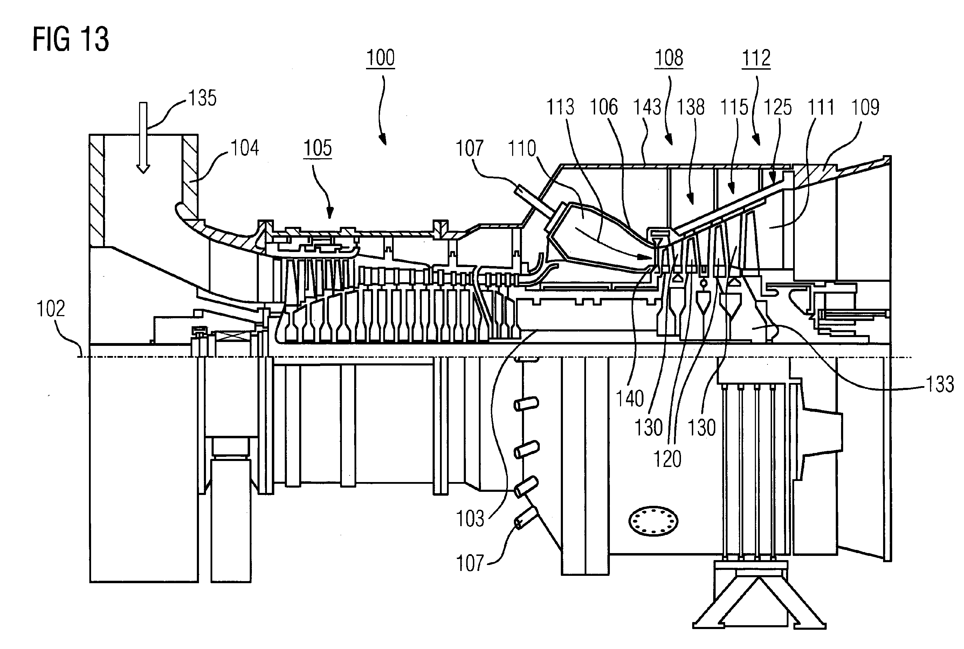

Dies dient beim Betrieb einer Gasturbine 100 (Fig. 13) zur "Wet Compression".

Auf der Saug- und Druckseite können die gleiche Anzahl von Düsen 6, 6' 6", ... vorhanden sein aber auch verschiedene.

Insbesondere ist in der Vorderkante 5 eine Düse 6, 6', ... vorhanden.

Senkrecht zur Zeichnungsebene können wiederum Düsen 6, 6', ... an der Vorderkante 5 und/oder Saugseite/Druckseite vorhanden sein.

Üblicherweise weist die Kompressorschaufel 4 im Inneren einen von Wänden 2 umgebenden Hohlraum 3 auf, über den der Düse 6' die Flüssigkeit zuführbar ist.

Figur 2 zeigt einen Schnitt durch eine solche Düse 6', welche in der saugseitigen oder druckseitigen Wand 2 der Kompressorschaufel 4 angeordnet sein kann.

In der Wand 2 einer hohlen Kompressorschaufel 4 ist ein Kanal 40 aus mehreren Kanalabschnitten 25', 28', 29', 31', 32' vorhanden, die die Düse 6' bilden.

Jeder Kanalabschnitt 25', 28', 29', 31', 32', ... weist allgemein vorzugsweise einen geradlinigen Verlauf oder vorzugsweise einen Änderungsverlauf < 8° auf.

Die Kanalabschnitte 25', 28', 29', 31', 32', ... sind möglichst nahe einer äußeren Oberfläche 26 der Kompressorschaufel 4 (generell nur als Beispiel einer Schaufel).

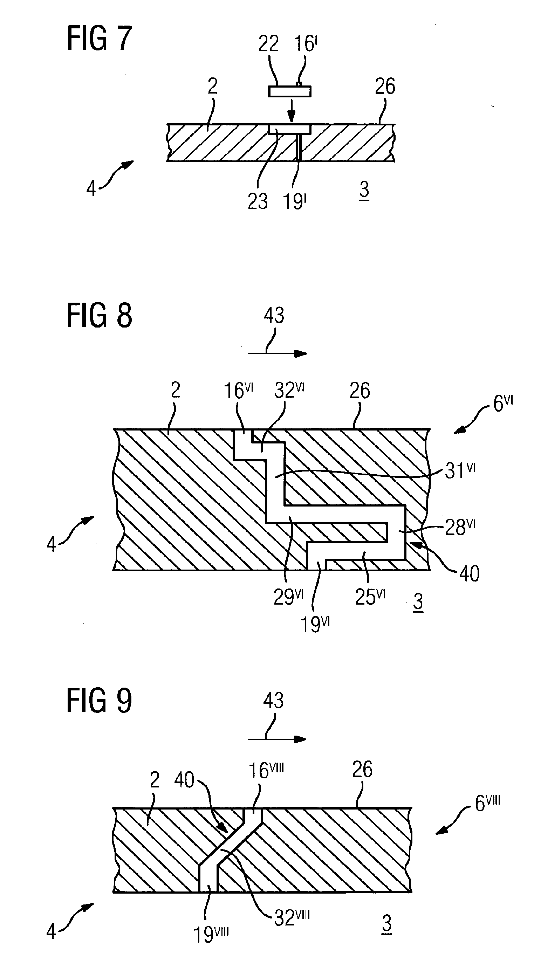

Das Wasser (nur als beispielhafte Flüssigkeit) strömt durch einen Eingang 19' in einen ersten Kanalabschnitt 25', der sich vorzugsweise mehr oder weniger parallel zur äußeren Oberfläche 26 erstreckt bis zum Abschnitt 28', bei dem der Kanal 40 um 90° in senkrechter Richtung zur Oberfläche 26 abbiegt, um dann wiederum um 90° in dieselbe Richtung, wie der Kanalabschnitt 25' in den Kanalabschnitt 29' einzubiegen. Durch den Kanalabschnitt 31' erfolgt eine 180° Umlenkung in den Kanalabschnitt 32', der parallel zur Oberfläche 26 verläuft und damit entgegen der Strömungsrichtung im ersten Kanalabschnitt 25' der schließlich in eine Ausgangsöffnung 16' mündet; insgesamt also 90°/180° oder 180°/90° wie in Figur 8.

Dieser Verlauf der Kanalabschnitte 25', 28', 29', 31', 32' ist nur beispielhaft.

In Figur 3 ist eine weitere Modifikation des Ausführungsbeispiels gemäß Figur 2 gezeigt.

Der Unterschied besteht darin, dass der Einlass 19" in einer Längsrichtung, beispielsweise der Überström- bzw. Umströmrichtung 43 der Kompressorschaufel 4 hinter dem Auslass 16" liegt, wohingegen in Figur 2 der Einlass 19" vor dem Auslass 16" liegt.

In den Figuren 2 und 3 findet eine Umlenkung um 90° und dann um 180° statt.

Es kann auch zuerst eine Umlenkung um 180° und dann um 90° erfolgen (Fig. 8).

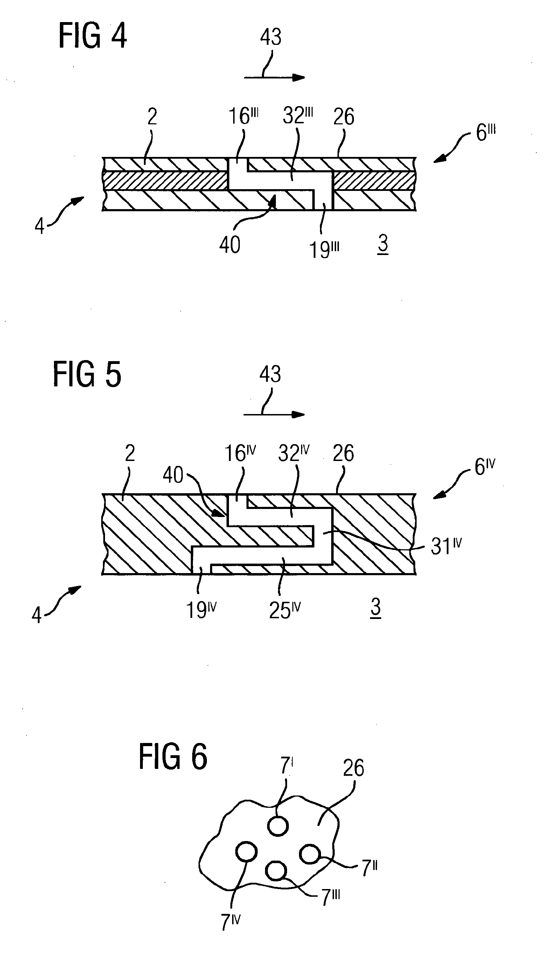

Ein anderes Ausführungsbeispiel zeigt Figur 4, bei dem nur ein Kanalabschnitt 32"' vorhanden ist, so dass die Flüssigkeit ausgehend vom Einlass 19"' nur einmal um 90° umgelenkt wird.

Der Einlass 19"', kann in Richtung 43 gesehen auch vor dem Auslass 16"' liegen.

Figur 5 zeigt einem weiteren beispielhaften Kanal 40.

Der Kanal 40 weist drei Abschnitte 25"", 31"", 32"" auf, d.h. er wird einmal um 180° umgelenkt.

Der Einlass 19"" kann hier in Strömungsrichtung 43 vor (Fig. 5) oder hinter dem Auslass 16"" liegen.

Eine solche Düse 6, 6' , 6'', ... kann auch separat hergestellt werden und wird dann als Modul 22 in einer Vertiefung 23 in der Kompressorschaufel 4 eingesetzt (Fig. 7).

Die Düse 6', 6'', ... kann eine einzelne Öffnung 16', ... darstellen oder auch eine geringförmige Anordnung von einzelnen Öffnungen 7', 7", ... darstellen, wie es in Figur 6 dargestellt ist.

Die Düse 6', 6", 22 ist vorzugsweise in laminarer Struktur hergestellt, bei der insbesondere einzelne Schichten wie Bleche übereinander gebracht werden, wobei die Bleche entsprechende Aussparungen für die Kanalabschnitte 25, 28, 39, 31, 32 aufweisen. Dis ist in Figur 4 exemplarisch dargestellt. Ebenso kann die Düse 6' oder das Modul 22 durch Rapid-Prototyping-Verfahren hergestellt werden oder die ganze Kompressorschaufel 4 wird so hergestellt.

Die Düse 6', 6", ..., 22 ist vorzugsweise eingegossen, d.h. sie ist vorgefertigt und die Gussform eingelegt und dann umgossen.

Figur 9 zeigt ein weiteres Ausführungsbeispiel der Erfindung (6^{VIII}).

Auch hier ist ein Kanalabschnitt 32^{VIII} vorhanden, der ein Änderungsverlauf darstellt, wobei der im Gegensatz zu Figur 4 nicht um 90° erfolgt, sondern in einem Winkel zwischen > 10° und < 80°, hier vorzugsweise 45° zur Oberfläche 26.

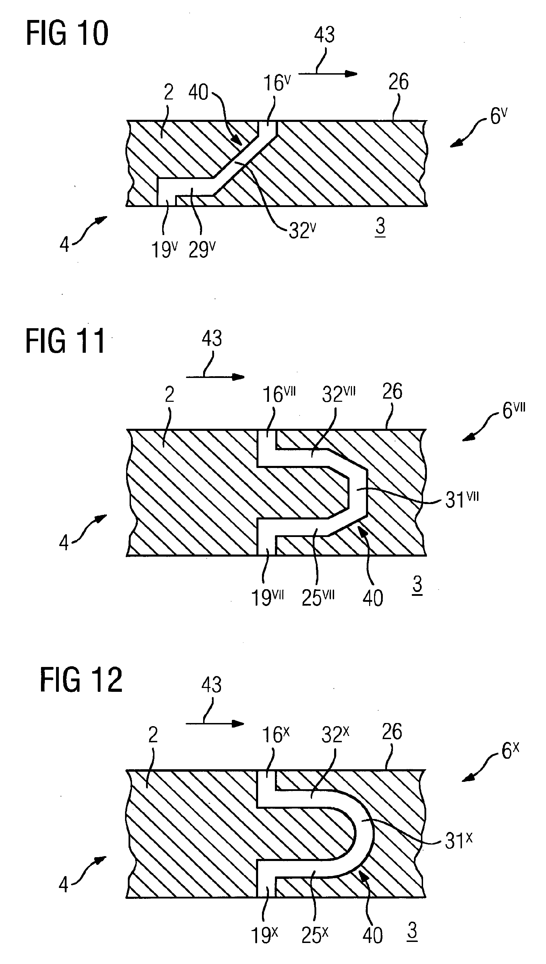

Eine weitere leichte Modifikation der Figur 9 stellt Figur 10 (6^{V}) dar, bei dem noch ein Kanalabschnitt 25^{V} vorhanden ist, der ungefähr parallel zur Überströmrichtung 43 oder parallel zur Oberfläche 26 verläuft.

In Figur 11, 12 sind Modifikationen des Ausführungsbeispiels gemäß Figur 5 dargestellt (bzw. Kombination mit den Figuren/Ausführungsbeispielen, bei denen eine Umlenkung um 180° erfolgt).

In Figur 5 erfolgt eine Umlenkung um 180°, wobei dies auch in Figur 12 erfolgt jedoch durch einen gebogenen Kanalabschnitt 31^{X}.

Ebenso vorzugsweise kann der Kanalabschnitt 31^{VII} durch mehrere Kanalabschnitte gegeben sein, wobei durch entsprechende Umlenkung eine Gesamtumlenkung um 180° erreicht wird (Fig. 11). Hier erfolgt beispielsweise zuerst eine Umlenkung um 45°, dann um 90° und dann wiederum um 45°.

Insbesondere ist die Anordnung der Kanalabschnitte 25' - 32', ... flach ausgeführt.

Es ist immer zumindest ein Änderungsverlauf des Kanals 40 vorhanden, d.h. eine Umlenkung zwischen 10° und 180°, um 90° oder 180°.

Der Querschnitt des Kanals 40 bzw. der Kanalabschnitte 25', 28, ... ist vorzugsweise rechteckig.

Die Versorgung des Kanals 40 erfolgt durch den Schaufelfuß und/oder bei Leitschaufeln durch die obere Schaufelplattform.

Der Auslass 16', ... bzw. der Einlass 19', ... gilt im Sinne der Erfindung nicht als ein Kanalabschnitt mit Umlenkung.

Der Vorteil dieser Düsen 6, 6', ... ist es generell, dass sich keine Tröpfchen bilden, wobei sich dies erfindungsgemäß durch die Richtungsumlenkungen innerhalb des Kanals 40 ergibt.

Die Figur 13 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

## Patentansprüche

1. Kompressorschaufel (4) mit zumindest einer Düse (6, 6', 6", ..., 22) zur Flüssigkeitsausspritzung,
insbesondere Wasserausspritzung,
**dadurch gekennzeichnet, dass**
die zumindest eine Düse (6, 6', 6'', ..., 22) in laminarer Struktur hergestellt ist, bei der einzelne Schichten wie Bleche übereinander gebracht werden, und verschieden orientiert verlaufende Kanalabschnitte (25', 28', 29', 31', 32', ...) eines Kanals (40) zwischen Einlass (19', ...) und Auslass (16', ...) aufweist, wobei die Bleche für die Kanalabschnitte (25, 28, 39, 31, 32) entsprechende Aussparungen aufweisen.

2. Kompressorschaufel (4) nach Anspruch 1,
bei der der Kanal (40) zwischen Einlass (19) und Auslass (16) mindestens einmal,
insbesondere mindestens zweimal umgelenkt wird,
ganz insbesondere nur zweimal umgelenkt wird.

3. Kompressorschaufel (4) nach Anspruch 1 oder 2,
bei der der Kanal (40) zumindest einmal,
insbesondere nur einmal umgelenkt wird.

4. Kompressorschaufel (4) nach einem oder mehreren der vorherigen Ansprüche 1 bis 3,
bei der der Kanal (40) zwischen 7.0° und 180° umgelenkt wird,
insbesondere zwischen 30° und 180°,
ganz insbesondere zwischen 40° und 180°.

5. Kompressorschaufel (4) nach einem oder mehreren der vorherigen Ansprüche 1 bis 4,
bei dem der Kanal (40) um 90° umgelenkt wird.

6. Kompressorschaufel (4) nach einem oder mehreren der vorherigen Ansprüche 1 bis 4,
bei dem der Kanal (40) um 30° bis 70° umgelenkt wird.

7. Kompressorschaufel (4) nach einem oder mehreren der vorherigen Ansprüche 1 bis 4,
bei dem der Kanal (40) um 180° umgelenkt wird.

8. Kompressorschaufel (4) nach einem oder mehreren der vorherigen Ansprüche 1 bis 7,
bei der die Kanalabschnitte (25', 28', ...) geradlinig ausgebildet sind.

9. Kompressorschaufel (4) nach einem oder mehreren der vorherigen Ansprüche 1 bis 8,
bei der die Düse (6, 6', 6", ...) als Modul (22) vorhanden ist,
und insbesondere in eine Vertiefung (23) der Kompressorschaufel (4) eingesetzt werden kann.

10. Kompressorschaufel (4) nach einem oder mehreren der vorherigen Ansprüche 1 bis 9,
bei der eine Düse (6, 6', 6", ..., 22) eine ringförmige oder ovalförmige Anordnung von einzelnen Löchern (7', 7", ...) darstellt.

11. Kompressorschaufel (4) nach einem oder mehreren der vorherigen Ansprüche 1 bis 10,
bei der die Düse (6, 6', 6", ..., 22) innerhalb einer Wand (2) der Kompressorschaufel (4) vorhanden ist.

12. Kompressorschaufel (4) nach einem oder mehreren der vorherigen Ansprüche 1 bis 11,
bei der eine Düse (6, 6', ...) an der Vorderkante (5) vorhanden ist.

13. Kompressorschaufel (4) nach einem oder mehreren der vorherigen Ansprüche 1 bis 12,
bei der Düsen (6, 6', 6'', 6"', ...) auf der Saug- und/oder Druckseite vorhanden sind und die Flüssigkeit durch das Innere der Kompressorschaufel (4) zuführbar ist.

14. Kompressorschaufel (4) nach einem oder mehreren der vorherigen Ansprüche 1 bis 13 mit laminarer Ausgestaltung der Düse (6, 6', ...) an der Vorderkante (5),
wobei das die zumindest eine Düse (6, 6', 6'', ...) umgebende Material als Schutzschicht gegen eine Tropfenschlagerosion dient.

## Claims

1. Compressor blade (4) having at least one nozzle (6, 6', 6", ..., 22) for ejecting fluid,
in particular for ejecting water,
**characterized in that**
the at least one nozzle (6, 6', 6", ..., 22) is produced as a laminar structure in which individual layers such as metal sheets are laid on top of each other, and has differently orientated channel sections (25', 28', 29', 31', 32', ...) of a channel (40) between an inlet (19', ...) and an outlet (16', ...), wherein the metal sheets have cutouts corresponding to the channel sections (25, 28, 29, 31, 32).

2. Compressor blade (4) according to Claim 1,
in which the channel (40) between the inlet (19) and the outlet (16) is diverted at least once,
in particular at least twice,
most particularly only twice.

3. Compressor blade (4) according to Claim 1 or 2,
in which the channel (40) is diverted at least once,
in particular only once.

4. Compressor blade (4) according to one or more of the preceding Claims 1 to 3,
in which the channel (40) is diverted by between 10° and 180°,
in particular between 30° and 180°,
most particularly between 40° and 180°.

5. Compressor blade (4) according to one or more of the preceding Claims 1 to 4,
in which the channel (40) is diverted by 90°.

6. Compressor blade (4) according to one or more of the preceding Claims 1 to 4,
in which the channel (40) is diverted by between 30° and 70°.

7. Compressor blade (4) according to one or more of the preceding Claims 1 to 4,
in which the channel (40) is diverted by 180°.

8. Compressor blade (4) according to one or more of the preceding Claims 1 to 7,
in which the channel sections (25', 28', ...) are straight.

9. Compressor blade (4) according to one or more of the preceding Claims 1 to 8,
in which the nozzle (6, 6', 6", ...) is present as a module (22),
and in particular can be inserted into a recess (23) in the compressor blade (4).

10. Compressor blade (4) according to one or more of the preceding Claims 1 to 9,
in which a nozzle (6, 6', 6", ..., 22) is an annular or oval arrangement of individual holes (7', 7", ...).

11. Compressor blade (4) according to one or more of the preceding Claims 1 to 10,
in which the nozzle (6, 6', 6", ..., 22) is present within a wall (2) of the compressor blade (4).

12. Compressor blade (4) according to one or more of the preceding Claims 1 to 11,
in which a nozzle (6, 6', ...) is present at the leading edge (5).

13. Compressor blade (4) according to one or more of the preceding Claims 1 to 12,
in which nozzles (6, 6', 6", 6'", ...) are present on the suction face and/or on the pressure face, and the fluid can be fed through the inside of the compressor blade (4).

14. Compressor blade (4) according to one or more of the preceding Claims 1 to 13, the nozzle (6, 6', ...) at the leading edge (5) having a laminar construction,
wherein the material surrounding the at least one nozzle (6, 6', 6", ...) serves as a protective layer against drop impingement erosion.

## Revendications

1. Aube ( 4 ) de compresseur comprenant au moins une buse
( 6, 6', 6", ..., 22 ) de pulvérisation de liquide, notamment de pulvérisation d'eau,
**caractérisée en ce que**
la au moins une buse ( 6, 6', 6", ..., 22 ) est fabriquée en structure stratifiée, dans laquelle des couches individuelles, comme des tôles, sont mises les unes sur les autres et a, entre une entrée ( 19', ... ) et une sortie ( 16', ... ), des tronçons ( 25', 28', 29', 31', 32', ... ) d'un canal ( 40 ) s'étendant en étant orientés différemment, les tôles ayant des évidements correspondant pour les tronçons ( 25, 28, 29, 31, 32 ) du canal.

2. Aube ( 4 ) de compresseur suivant la revendication 1,
dans laquelle le canal ( 40 ) change la direction au moins une fois en l'entrée ( 19 ) et la sortie ( 16 ), notamment au moins deux fois,
d'une manière tout à fait particulière seulement deux fois.

3. Aube ( 4 ) de compresseur suivant la revendication 1 ou 2, dans laquelle le canal ( 40 ) change de direction au moins fois, notamment seulement une fois.

4. Aube ( 4 ) de compresseur suivant l'une ou plusieurs des revendications précédentes 1 à 3,
dans laquelle le canal ( 40 ) change de direction entre 10° et 180°,
notamment entre 30° et 180°,
tout à fait particulièrement entre 40° et 180°.

5. Aube ( 4 ) de compresseur suivant l'une ou plusieurs des revendications précédentes 1 à 4,
dans laquelle le canal ( 40 ) change de direction de 90°.

6. Aube ( 4 ) de compresseur suivant l'une ou plusieurs des revendications précédentes 1 à 4,
dans laquelle le canal ( 40 ) change de direction de 30° à 70°.

7. Aube ( 4 ) de compresseur suivant l'une ou plusieurs des revendications précédentes 1 à 4,
dans laquelle le canal ( 40 ) change de direction de 180°.

8. Aube ( 4 ) de compresseur suivant l'une ou plusieurs des revendications précédentes 1 à 7,
dans laquelle les tronçons 25', 28', ... ) du canal sont rectilignes.

9. Aube ( 4 ) de compresseur suivant l'une ou plusieurs des revendications précédentes 1 à 8,
dans laquelle la buse ( 6, 6', 6", ... ) est présente sous la forme d'un module ( 22 ),
en pouvant notamment être insérée dans une cavité ( 23 ) de l'aube ( 4 ) de compresseur.

10. Aube ( 4 ) de compresseur suivant l'une ou plusieurs des revendications précédentes 1 à 9,
dans laquelle une buse ( 6, 6', 6", ..., 22 ) représente un agencement de forme annulaire ou de forme ovale de divers trous ( 7', 7", ... ).

11. Aube ( 4 ) de compresseur suivant l'une ou plusieurs des revendications précédentes 1 à 10,
dans laquelle la buse ( 6, 6', 6", ..., 22 ) est présente à l'intérieur d'une paroi ( 22 ) de l'aube ( 4 ) de compresseur.

12. Aube ( 4 ) de compresseur suivant l'une ou plusieurs des revendications précédentes 1 à 11,
dans laquelle une buse ( 6, 6', ... ) est présente au bord ( 5 ) d'attaque.

13. Aube ( 4 ) de compresseur suivant l'une ou plusieurs des revendications précédentes 1 à 12,
dans laquelle des buses ( 6, 6', 6", 6'", ... ) sont présentes à l'intrados et/ou à l'extrados et le liquide peut être apporté par l'intérieur de l'aube ( 4 ) de compresseur.

14. Aube ( 4 ) de compresseur suivant l'une ou plusieurs des revendications précédentes 1 à 13, ayant une conformation stratifiée des buses ( 6, 6', ... ) sur le bord ( 5 ) d'attaque,
dans laquelle le matériau entourant la au moins une buse ( 6, 6', 6", ... ) sert de couche de protection vis-à-vis d'une érosion par choc de gouttes.
